# EUROPEAN PATENT APPLICATION

(11) **EP 3 184 473 A1**
(43) Date of publication of application: **28.06.2017**
(21) Application number: 16204818.5
(22) Date of filing: 16.12.2016
(51) Int. Cl.: B65G 49/06, C03B 33/03

(54) **LOADING AND FEEDING TABLE, PARTICULARLY FOR CUTTING LINES FOR LAMINATED AND/OR MONOLITHIC GLASS**

(30) Priority: 21.12.2015 IT UB20159265
(71) Applicant: Macotec S.R.L., 23010 Rogolo, (SO) (IT)
(72) Inventor: COLLI, Maurizio, 23019 Traona SO (IT)
(74) Representative: Modiano, Micaela Nadia

(57) **Abstract**

A loading and feeding table (1), particularly for cutting lines for laminated and/or monolithic glass, which comprises a resting surface (3) for a glass sheet being processed (5), which is movable on such resting surface (3) in a main direction of movement (7) toward a processing station (9), and comprises a plurality of tilting arms (11) which are pivoted to the loading and feeding table (1) about a rotation axis (13) that is substantially parallel to the main direction of movement (7), and advancement means (15) which are configured to make the sheet being processed (5) advance along the main direction of movement (7) on the resting surface (3); the tilting arms are adapted to support a glass sheet on hold (5') while the sheet being processed (5) is resting on the resting surface (3).

## Description

The present invention relates to a loading and feeding table, particularly for cutting lines for laminated glass and for combined cutting lines, i.e. lines adapted for cutting both monolithic glass and laminated, or stratified, glass.

Laminated glass is a glass that generally comprises two glass plates coupled together with the interposition of a plastic film, usually of the type of polyvinyl butyral, which gives the laminated glass high characteristics of strength, security and safety.

The process of cutting a laminated glass involves the following processing steps:
1. Upper and lower incision of both surfaces of the laminated glass by way of adapted cutting wheels of hard metal;
2. Opening of the incisions performed, according to the processing cycles, by way of a breakout bar and/or breakout wheel(s);
3. Heating of the plastic film by way of electric resistance;
4. Separation of the glass sheets by way of mechanical traction;
5. Cutting of the plastic film by way of an adapted blade or by way of the simple thermal action of the electric resistance.

The cutting of laminated glass occurs with special machines that, typically, carry out all the operations described above by always acting along the same line, since all the tools for executing the required operations on the glass can slide along one or more straight support structures, called bridges. In particular, tables for cutting laminated glass are constituted by a work table, on which the glass sheet to be sectioned is placed, and one or more bridges which support both the processing tools and the means of gripping the sheet in order to be able to exert the traction necessary to separate the cut glass sheets.

Since the processing operations always occur along a same cutting line, then in order to be capable of cutting a glass sheet into several sub-sheets, down to the desired measurements, it is necessary to move the sheet, and the various sub-sheets that are progressively produced, on the work table, in order to cut them to the desired final measurements.

In particular, in order to be capable of producing sheets, or more precisely sub-sheets, of glass that have the desired measurements starting from an initial glass sheet, the sheet is first made to advance, on the work table, up to the cutting line, where it is cut into a first sub-sheet. The remaining part of the sheet is "parked" on the work table, and more precisely on the loading and feeding table, in a position where it does not obstruct the rotation of the sub-sheet obtained from the first cutting. In fact the sub-sheet is generally rotated, for example through 90°, in order to be cut further, until the finished piece is obtained. At this point the operator can proceed, in the same manner, with the procedure of cutting the remaining part of the sheet into several sub-sheets.

Lines for cutting laminated glass and combined lines generally comprise:
- a table for loading and for feeding, the function of which is twofold: receiving the sheet to be cut and enabling the movement thereof toward the cutting line and receiving and parking the remaining portion of sheet when the sub-sheet, previously separated, is being processed under the cutting bridges;
- A buffer space, i.e. a resting surface the function of which is to create an intermediate space between the loading and feeding table and the cutting table, in order to permit the rotation of the sub-sheets without interfering with the portion of sheet parked on the loading and feeding table, and also in order to permit the loading, on the loading and feeding table, of a new sheet when the last sub-sheet of the previous sheet is still being processed;
- A cutting table for laminated glass, which comprises all the necessary processing devices (incision, breakout, heating, separation and cutting).

However, such conventional machines are not devoid of drawbacks, among which is the fact that they occupy considerable space, in particular lengthwise, since the overall length is the sum of the lengths of the loading and feeding table, of the buffer space table and of the cutting table.

Containing the length of machines for cutting laminated glass, by way of for example the simple removal of the buffer space table, entails however reducing the functionality of the machine, in that:
- It makes it difficult or even impossible to rotate and move the sub-sheet when a portion of sheet is parked on the loading and feeding table;
- It prevents a new sheet from being loaded during the final cuts of the last sub-sheet;
- It prevents unloading of a large-sized leftover sheet section, for example in order to be able to return it to stores, during the final cuts of the last sub-sheet.

The aim of the present invention consists in providing a loading and feeding table, particularly for cutting lines for laminated and/or monolithic glass, as well as a cutting machine for laminated and/or monolithic glass, which overcome the limitations of the known art by making it possible to limit the lengthwise space occupation, while preserving all the operating functionalities.

Within this aim, an object of the present invention is to provide a loading and feeding table, as well as a cutting machine for laminated and/or monolithic glass, that make it possible:
- to rotate a sub-sheet when a sheet is parked;
- to load a new sheet during the final cuts of the last sub-sheet;
- to manually unload a large-sized leftover sheet section, in order to be able to return it to stores, during the final cuts of the last sub-sheet;
- if there are automatic systems for loading and storage connected upstream of the cutting line, to automatically return a large-sized leftover sheet section, in order to be able to return it to stores, during the final cuts of the last sub-sheet;
- to automatically load a sheet deposited on a stand.

Another object of the invention consists in providing a loading and feeding table, as well as a cutting machine for laminated and/or monolithic glass, that are capable of offering the widest guarantees of reliability and safety in use.

Another object of the invention consists in providing a loading and feeding table, as well as a cutting machine for laminated and/or monolithic glass, that are simple to provide and economically competitive when compared to the known art.

This aim and these and other objects which will become better apparent hereinafter are achieved by a loading and feeding table, particularly for cutting lines for laminated and/or monolithic glass, which comprises a resting surface for a glass sheet being processed, said sheet being processed being movable on said resting surface in a main direction of movement toward a processing station, characterized in that it comprises a plurality of tilting arms which are pivoted to said loading and feeding table about a rotation axis that is substantially parallel to said main direction of movement, said tilting arms being adapted to support a sheet of glass on hold while said sheet being processed is resting on said resting surface and in that it comprises advancement means which are configured to make said sheet being processed advance along said main direction of movement on said resting surface.

This aim and these and other objects which will become better apparent hereinafter are also achieved by a cutting machine for laminated and/or monolithic glass, which comprises a table for loading and feeding a glass sheet and a table for processing said glass sheet, said loading and feeding table and said processing table defining a resting surface for a glass sheet being processed, said processing table comprising a processing head that can be actuated along a processing direction in order to process said sheet being processed, characterized in that said loading and feeding table comprises a plurality of tilting arms which are pivoted to said loading and feeding table about a rotation axis that is substantially at right angles to said processing direction of said processing head, said tilting arms being adapted to support a glass sheet on hold while said sheet being processed is processed.

Furthermore, this aim and these and other objects which will become better apparent hereinafter are also achieved by a method for cutting a laminated and/or monolithic glass sheet which comprises the step of moving a glass sheet being processed from a resting surface defined by a loading and feeding table to a processing station, along a main direction of movement of said glass sheet being processed, characterized in that it comprises the step of lifting a glass sheet, on hold waiting to be processed, with respect to said resting surface where said glass sheet being processed is arranged, and about a rotation axis that is substantially parallel to said main direction of movement of said glass sheet being processed.

Further characteristics and advantages of the invention will become better apparent from the detailed description of a preferred, but not exclusive, embodiment of a loading and feeding table, particularly for cutting lines for laminated and/or monolithic glass, as well as of a cutting machine for laminated and/or monolithic glass, which are illustrated by way of non-limiting example with the aid of the accompanying drawings wherein:

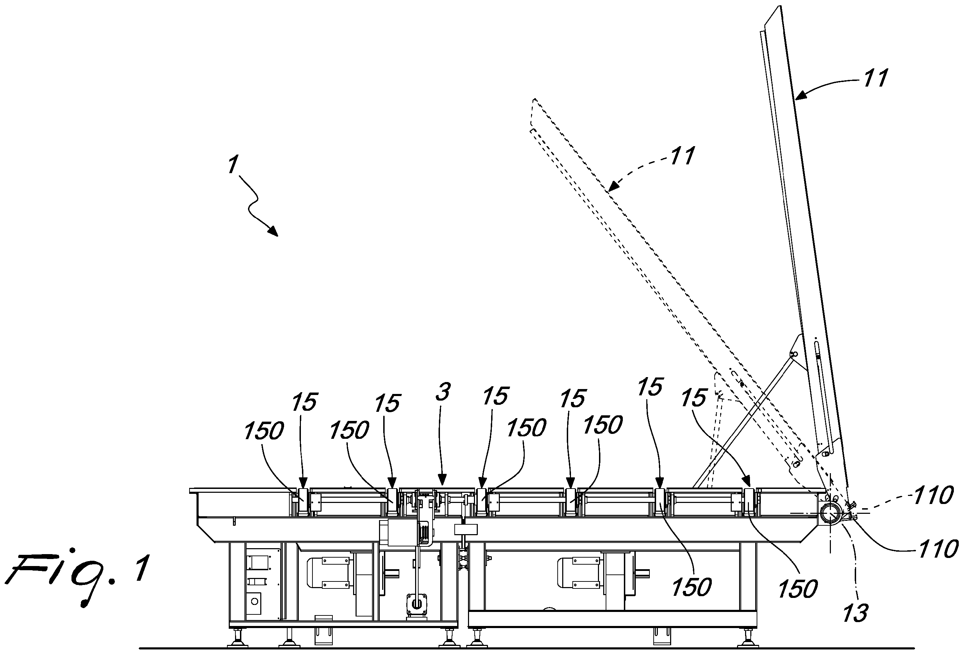

Figure 1 is a front elevation view of an embodiment of a loading and feeding table, according to the invention;

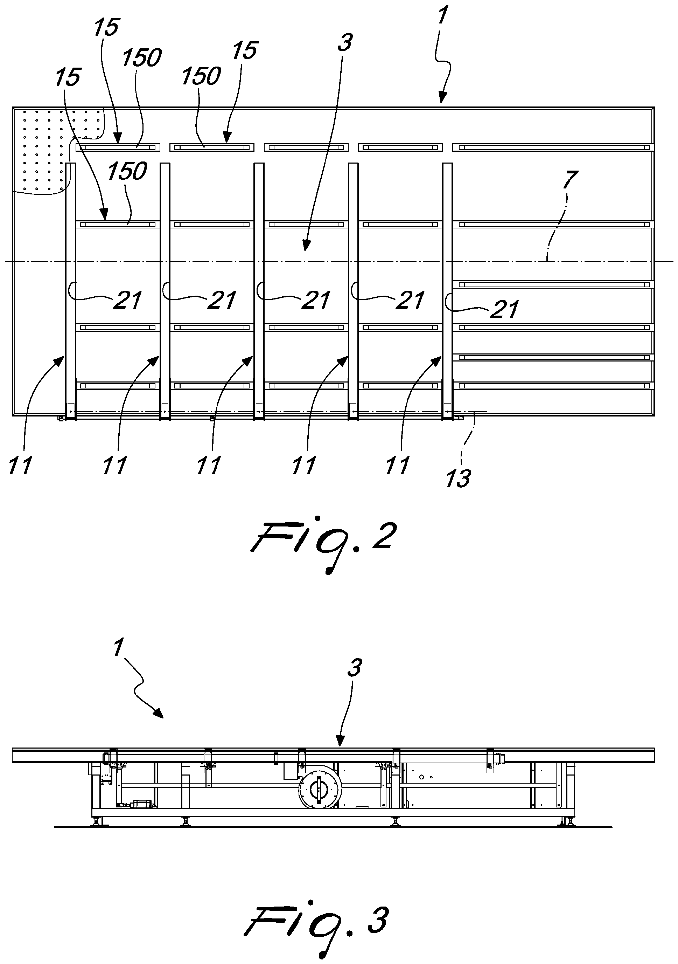

Figure 2 is a plan view from above of the table of Figure 1, according to the invention;
Figure 3 is a side view of the table of Figure 1, according to the invention;
Figures from 4 to 9a show the steps of a method of loading, feeding and cutting a laminated glass sheet, carried out by a cutting machine for laminated glass, according to the invention;
Figure 10 shows a cutting machine for laminated glass, according to the invention, that also comprises a system for automatically loading glass plates and a buffer space table;

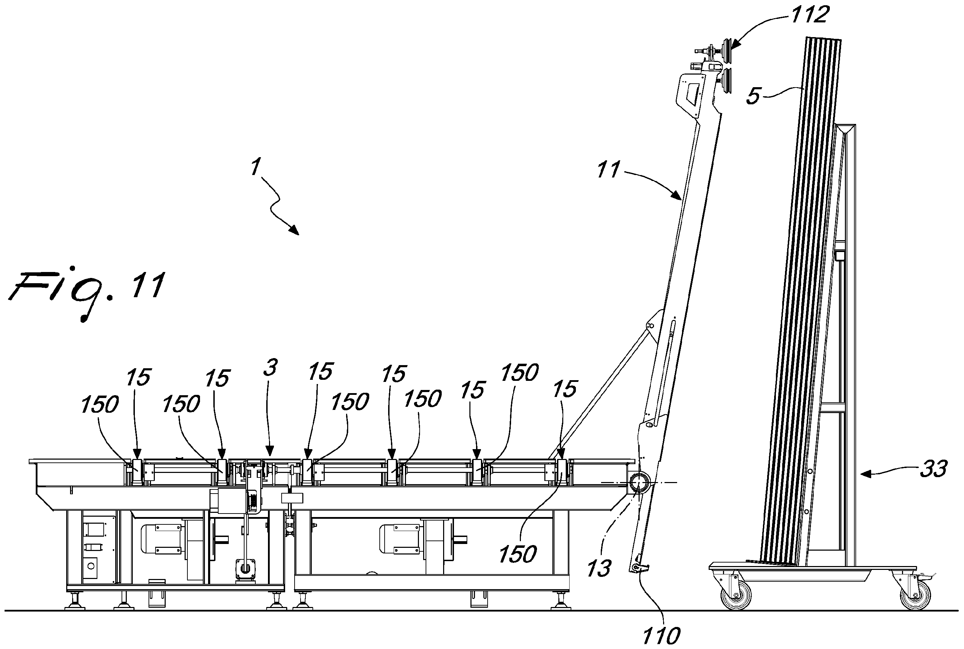

Figure 11 is a front elevation view of a variation of the loading and feeding table shown in Figure 1, according to the invention;

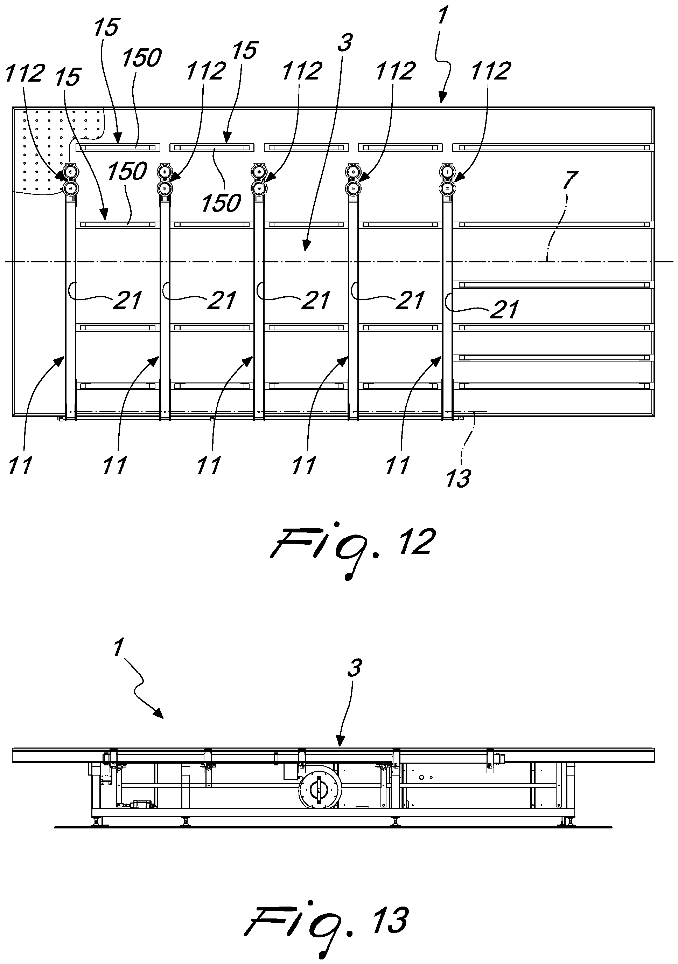

Figure 12 is a plan view from above of the table of Figure 11, according to the invention;
Figure 13 is a side view of the table of Figure 11, according to the invention.

With reference to the figures, the loading and feeding table, particularly for cutting lines for laminated and/or monolithic glass, generally designated by the reference numeral 1, comprises a resting surface 3 for a glass sheet being processed 5. The sheet being processed 5 can move on such resting surface 3 in a main direction of movement 7 toward a processing station 9, which is advantageously a cutting station.

According to the invention, the loading and feeding table 1 comprises a plurality of tilting arms 11, which are pivoted to the table 1 about a rotation axis 13 which is substantially parallel to the main direction of movement 7. The tilting arms are adapted to support a glass sheet on hold 5' while a sheet being processed 5 is resting on the resting surface 3. According to the invention, furthermore, the loading and feeding table 1 comprises advancement means 15 which are configured to make the sheet being processed 5 advance along the main direction of movement 7, on the resting surface 3.

Again with reference to the figures, the cutting machine for laminated and/or monolithic glass, generally designated by the reference numeral 100, comprises a table 1 for loading and feeding a glass sheet 5 and a table 23 for processing such glass sheet 5. The loading and feeding table 1 and the processing table 23 define a resting surface 3 for a glass sheet being processed 5. The processing table 23 comprises a processing head 25 which is actuatable along a processing direction 27 in order to process the sheet being processed 5.

According to the invention, the loading and feeding table 1 comprises a plurality of tilting arms 11 which are pivoted to the table 1 about a rotation axis 13 which is substantially at right angles to the processing direction 27. The tilting arms 11 are adapted to support a laminated glass sheet on hold 5' while the sheet being processed 5 is, as said, being processed.

Advantageously the processing table 23 is a cutting table, the processing head 25 is a cutting head and the processing direction 27 is a cutting direction.

The processing table 23 can comprise a series of devices for the incision, breakout, separation and/or heating of the glass sheet 5, which can be actuated along the processing direction 27 in order to execute the cutting of the glass sheet being processed 5.

Figures from 1 to 3 show the loading and feeding table 1 on its own. Figures from 11 to 13 show the loading and feeding table 1 on its own, in a variation thereof for automatically picking up glass sheets from a supporting stand thereof. Figures from 4 to 10 show the entire cutting machine for laminated glass 100.

In the above mentioned figures, and in the description that follows, solely for reasons of simplicity of description, only a line for cutting laminated glass is considered, and not a combined line for cutting laminated and monolithic glass. The difference between a cutting line for laminated glass and a combined line lies solely in the fact that in the combined line the loading and feeding table itself performs the function of monolithic cutting as it is equipped with a cutting bridge and a cutting head.

Therefore, below reference will be made generically to a loading and feeding table without this ruling out the possibility that such table can also perform cutting operations, i.e. that it is a table for loading, feeding and cutting.

Advantageously the tilting arms 11 can be moved from a configuration for loading a sheet of laminated glass on hold 5', to a configuration for feeding a laminated glass sheet 5 to be fed, wherein in the feeding configuration the tilting arms 11 lie below the resting surface 3 while in the loading configuration the tilting arms 11 are inclined with respect to the resting surface 3.

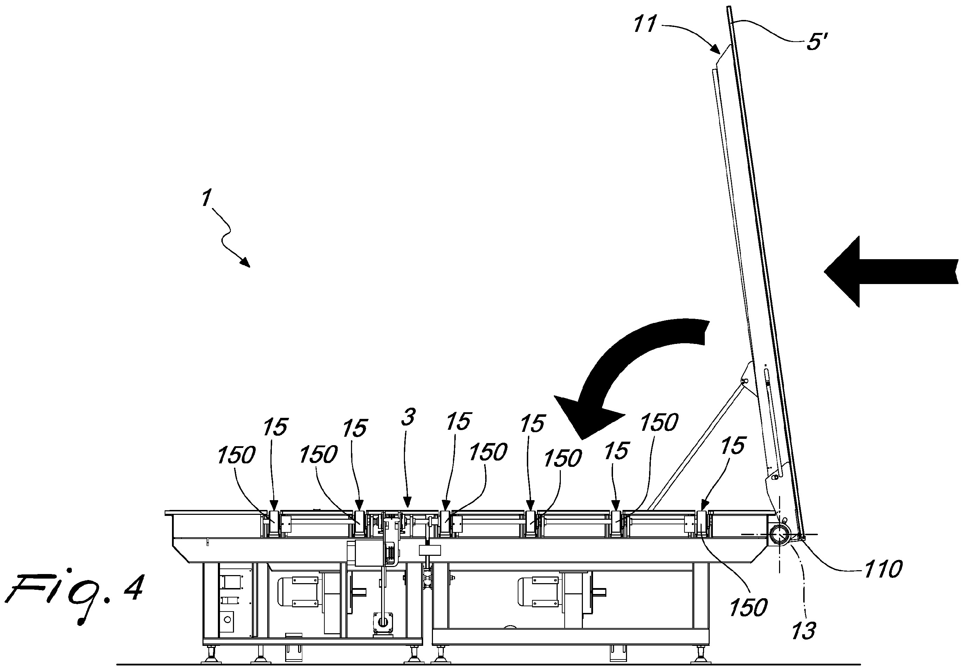

In particular, Figure 4 shows the configuration for loading a glass sheet on hold 5' waiting to be processed. In such configuration the tilting arms 11 are inclined with respect to the resting surface 3.

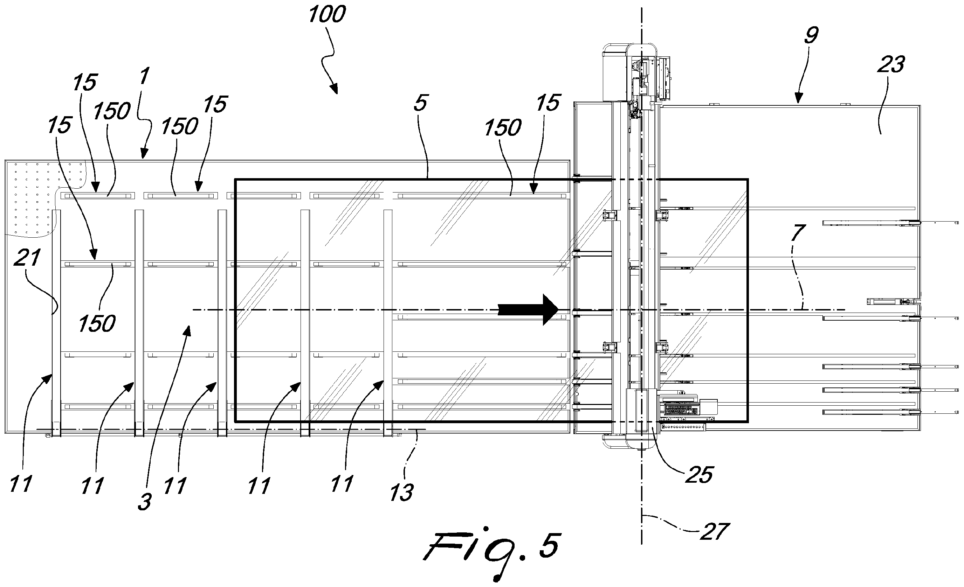

Figure 5 on the other hand shows the configuration for feeding a sheet being processed 5, which is resting on the resting surface 3, and can be moved along the movement direction 7 toward the cutting station 9. In such configuration the tilting arms 11 lie below the resting surface 3.

Advantageously, in the resting surface 3 defined by the loading and feeding table 1 there is a plurality of compartments 21 which are configured to receive the tilting arms 11 in their feeding configuration. Preferably the compartments 21 are provided in the loading and feeding table 1 so as to accommodate the corresponding tilting arms 11 retractably.

The advancement means 15 advantageously comprise a plurality of advancement belts 150 which are distributed on the resting surface 3, preferably interspersed with the compartments 21.

In this manner, in any position assumed by the sheet being processed 5 which is present on the loading and feeding table 1, at least one portion of the sheet 5 is in contact with at least one advancement belt 150, so as to enable the movement thereof along the movement direction 7.

Advantageously, two or more of the tilting arms 11 comprise, at the end thereof that is pivoted to the loading and feeding table 1, a supporting foot 110 which is adapted to support the sheet on hold 5' when the tilting arms 11 are inclined with respect to the resting surface 3.

Advantageously the supporting feet 110 can be moved from a supporting configuration, in which they protrude at right angles with respect to the tilting arm 11 in order to support the sheet 5', to a retracted configuration, in which they do not engage with the sheet 5.

In this manner, when the tilting arms 11 assume the feeding configuration, i.e. they disappear into the compartments 21 provided in the resting surface 3, such supporting feet 10 can be lowered so that they do not protrude above the resting surface 3 and therefore they will not hamper any rotations or movements of the sheet being processed 5.

Advantageously, two or more of the tilting arms 11 each comprise grip means 112 which are configured to load a laminated glass sheet 5' onto the tilting arms 11.

Such grip means 112 can advantageously comprise a pair of suckers fixed to the corresponding tilting arm 11. A sheet 5 can be conveniently approached to the tilting arms 11 until it comes into contact with the grip means 112, which grip the sheet 5, making it integral with the tilting arms 11, possibly also by virtue of cooperation with the supporting feet 110.

The loading and feeding table 1 advantageously comprises a footing which accommodates the devices necessary for actuating the movement belts 150 and the tilting arms 11, such as for example drive means.

Advantageously the movement belts 150 can have a single drive unit, or different drive units from belt to belt, or preferably different units for belt groups.

With regard to the cutting machine 100, this can be advantageously constituted only by the loading and feeding table 1 and by the cutting table 23, without therefore comprising any buffer space table, the presence of which is extraneous, as better explained hereinbelow.

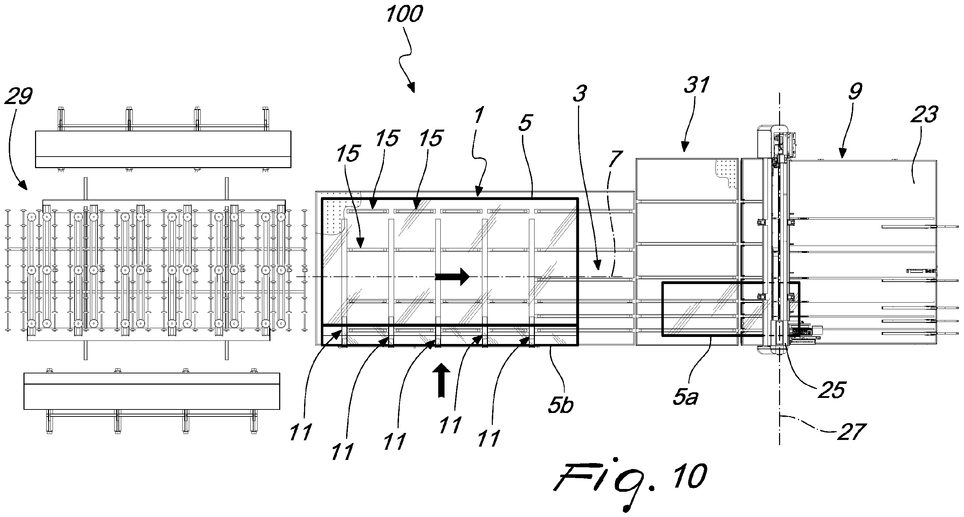

As shown in particular in Figure 10, the cutting machine 100 can be associated with a system 29 for automatically loading glass plates, which is arranged upstream of the loading and feeding table 1. In particular specific operating configurations of the cutting machine 100, and in particular if there are no restrictions on the space available, such machine can also comprise a buffer space table 31.

The method for cutting a laminated glass sheet comprises:
- the step of moving a laminated glass sheet being processed 5, from the resting surface 3 defined by the loading and feeding table 1 to the cutting station 9, along the main direction of movement 7 of the sheet being processed 5, and
- the step of lifting a laminated glass sheet 5', on hold waiting to be processed, with respect to the resting surface 3 where the laminated glass sheet being processed 5 is arranged, and about a rotation axis 13 that is substantially parallel to the main direction of movement 7 of the sheet being processed 5.

Operation of the cutting machine 100 and of the corresponding loading and feeding table 1 is described below in detail, with particular reference to Figures from 4 to 9a.

Figure 4 shows:
- the step of loading a sheet 5', still on hold waiting to be processed, onto the tilting arms 11, resting on the protruding supporting feet 110, and
- the subsequent step of lowering the tilting arms 11 until they disappear into the corresponding compartments 21, i.e. below the resting surface 3.

Figure 5 shows the step of advancement of the sheet 5, now being processed, toward the cutting table 23, by way of the actuation of the advancement means 15, along the main direction of advancement 7.

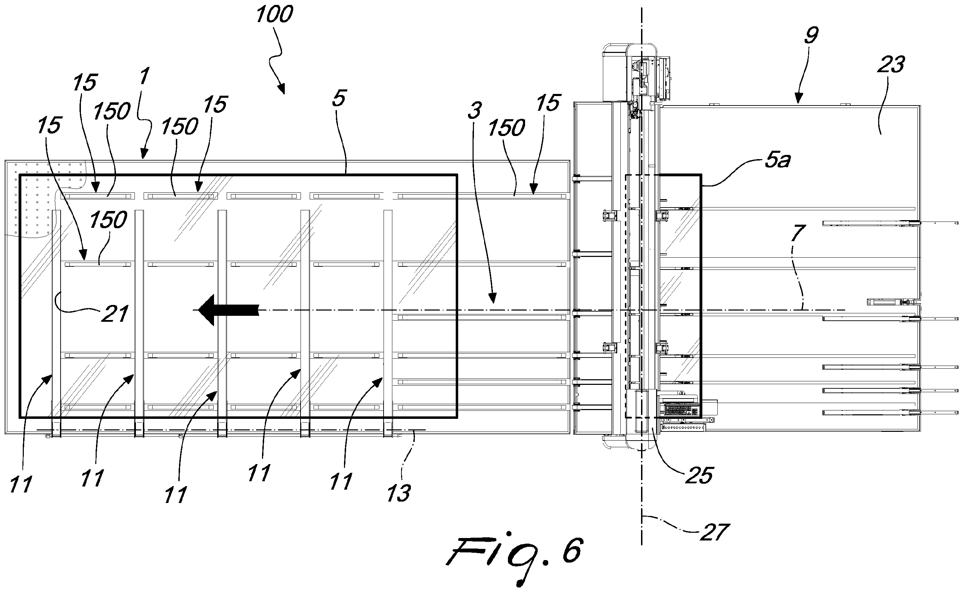

The sheet 5 can therefore be cut, along the cutting line 27, by the cutting head 25 and/or breakout, heating and separation tools, in order to obtain the first sub-sheet 5a, shown in the subsequent Figure 6.

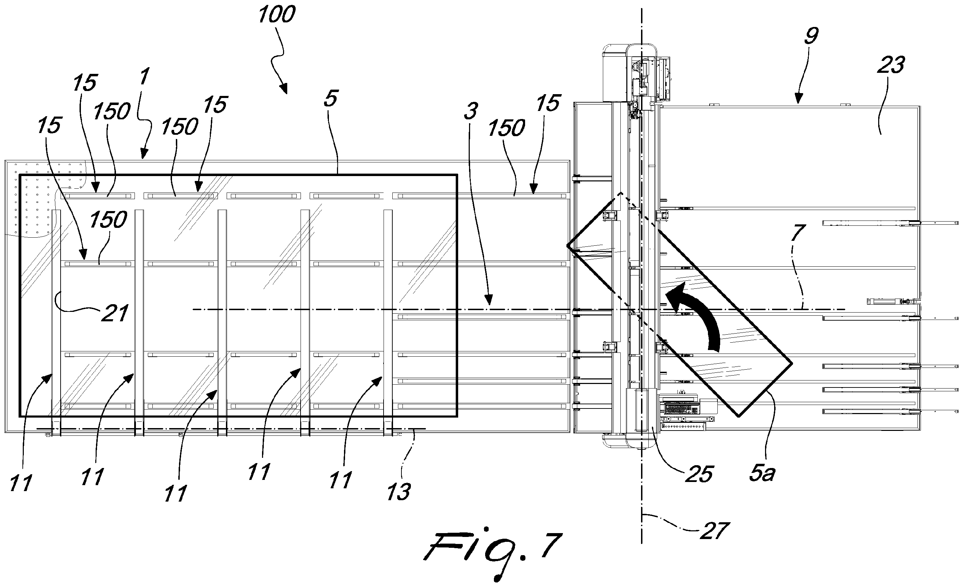

Figure 6 also shows the step of parking the leftover portion of the sheet 5 on the loading and feeding table 1, in order to permit the subsequent rotation of the sub-sheet 5a, as illustrated in Figure 7.

The movement of the sheet 5 toward the parking area can be done by the movement means 15.

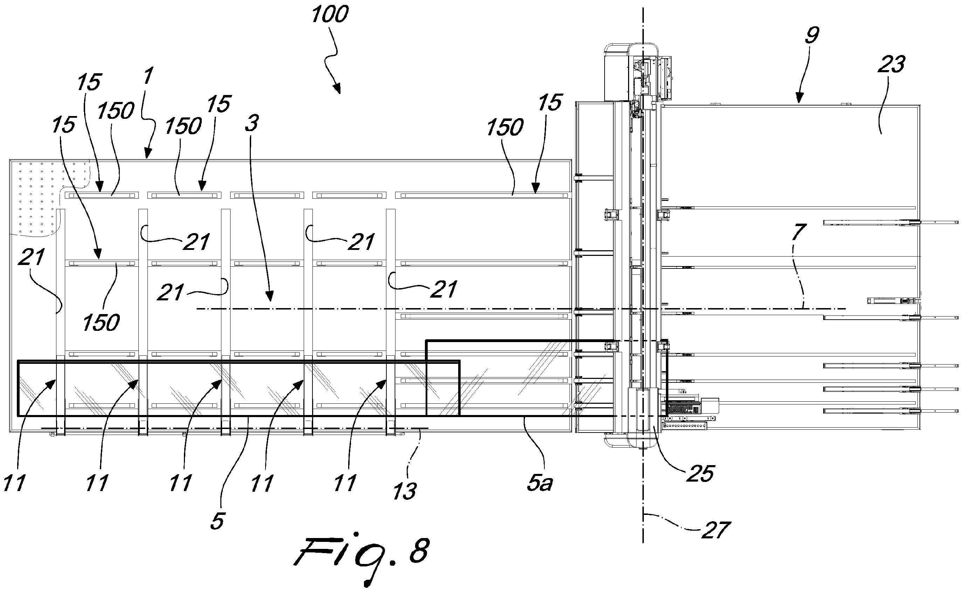

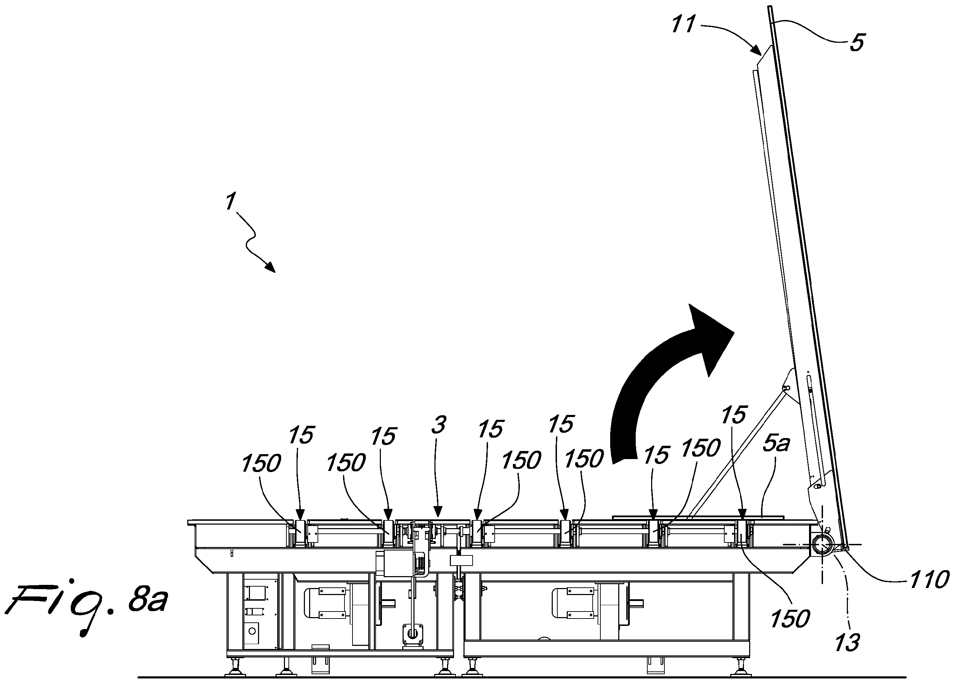

If the arrangement of the cuts and the dimensions of the sub-sheets should be such as to create interference between the sub-sheet 5a in the rotated position and the parked leftover portion of the sheet 5, it is possible to raise the tilting arms 11, with consequent lifting of the parked portion of the sheet 5, in order to free the work area and therefore allow the rotation and the cutting of the sub-sheet 5a, as shown in Figures 8 and 8a. The parked sheet therefore remains lifted onto the tilting arms 11, on hold waiting to be processed further.

Such situation is illustrated in Figures 8 and 8a, in which it can be seen that the parked sheet 5 is lifted with respect to the resting surface 3, on the tilting arms 11, while the sub-sheet 5a can be safely rotated and cut according to requirements, without interfering with the parked sheet 5.

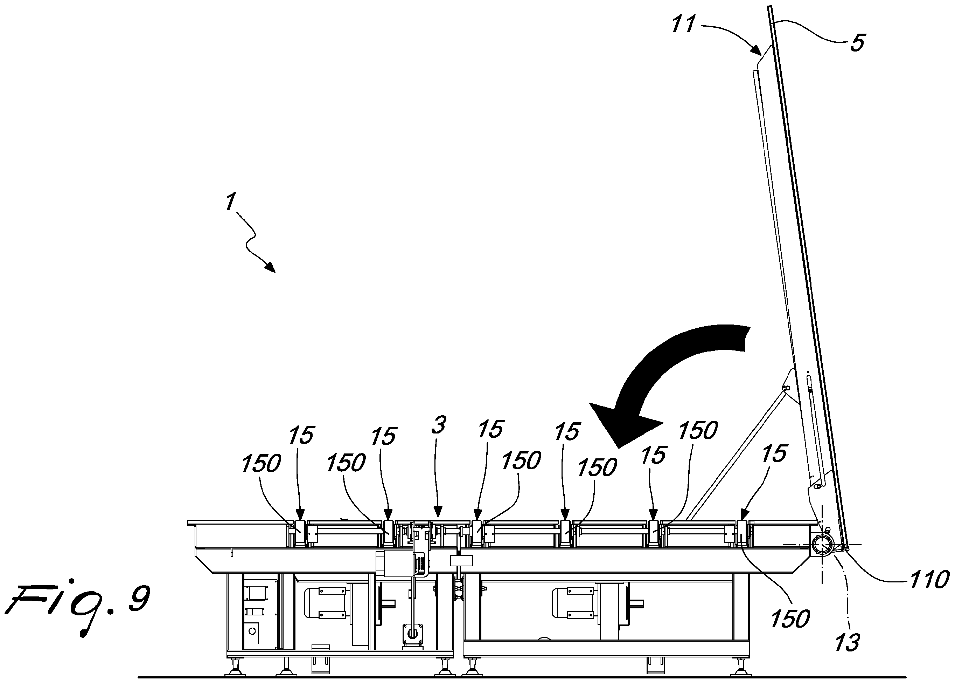

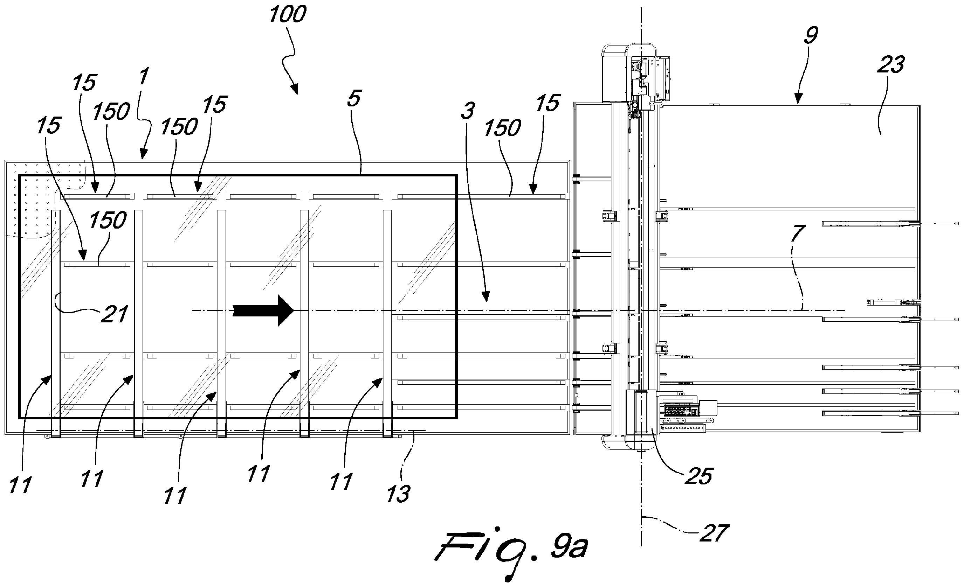

Figures 9 and 9a show a subsequent step, in which the sheet 5 that was previously parked and on hold waiting to be processed is lowered onto the resting surface 3 in order to then be moved anew toward the cutting plane 23, in order to execute a new cutting cycle.

When the last portion of sheet is on the cutting table 23 for the execution of the final cuts and its rear part is no longer proximate to the tilting arms 11, it is possible to lift the tilting arms 11 and actuate the supporting feet 110, in this manner permitting the unloading of the leftover portion of sheet, if the latter is to be returned to stores for subsequent reuse, or the loading of a new sheet.

When the cutting machine 100 is fed by a system 29 for automatically loading the sheets, as illustrated for example in Figure 10, it is possible to use the differentiated drive units of the advancement belts 150 to return the portion of sheet 5 to be reused to the automatic loading system 29, while the sub-sheet 5a is being processed.

Furthermore, using the lifting of the tilting arms 11 it is possible to manually load a new sheet 5b, which might be deposited on a stand that is not served by the automatic loading system 29, or a portion of sheet that has to be reused, while the automatic loading system 29 feeds the cutting line regularly. In this case, since the tilting arms 11 cannot be used to lift the parked sheet 5 in order to avoid possible interference with the sub-sheet 5a being processed, since the tilting arms 11 are engaged by an additional sheet 5b, advantageously there is also a table buffer space 31 between the loading and feeding table 1 and the cutting table 23.

Furthermore, as shown in Figures from 11 to 13, by using the presence of the tilting arms 11 and of the grip means 112 with which they are provided in sufficient numbers and arrangements, it is possible to provide a line for cutting laminated glass which, while all the functions described above remain valid, can also automatically load the sheets 5 deposited on a stand 33. In this manner in fact the tilting arms 11 can be actuated to grip the sheets 5 arranged on the stand 33 and lay them on the loading and feeding table 1 substantially automatically.

In practice it has been found that the loading and feeding table, according to the present invention, as well as the cutting machine for laminated glass, according to the invention, achieve the intended aim and objects since they make it possible to reduce the encumbrances of the cutting lines for laminated glass, without however reducing their functionalities.

Another advantage of the loading and feeding table and of the cutting machine, according to the invention, consists in that it permits a considerable automation of the method of cutting the sheets.

Another advantage of the loading and feeding table and of the cutting machine, according to the invention, consists in that they accelerate the method of cutting sheets, by allowing the loading of a glass sheet to be processed, or the removal of a glass sheet that has been only partially processed, when the processing of the previous sheet has not yet been completed.

The fact of lifting the sheet on hold about a rotation axis that is substantially parallel to the main direction of movement of the sheet being processed, or substantially at right angles to the cutting axis, adds greater freedom and flexibility to the processing of laminated glass sheets, by making the resting surface in the main direction of movement of the sheet always accessible.

The loading and feeding table and the cutting machine, thus conceived, are susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102015000085505 (UB2015A009265) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A loading and feeding table (1), particularly for cutting lines for laminated and/or monolithic glass, which comprises a resting surface (3) for a glass sheet being processed (5), said sheet being processed (5) being movable on said resting surface (3) in a main direction of movement (7) toward a processing station (9), **characterized in that** it comprises a plurality of tilting arms (11) which are pivoted to said loading and feeding table (1) about a rotation axis (13) that is substantially parallel to said main direction of movement (7), said tilting arms being adapted to support a sheet of glass on hold (5') while said sheet being processed (5) is resting on said resting surface (3) and **in that** it comprises advancement means (15) which are configured to make said sheet being processed (5) advance along said main direction of movement (7) on said resting surface (3).

2. The loading and feeding table (1) according to claim 1, **characterized in that** said tilting arms (11) can be moved from a configuration for loading a sheet of laminated glass (5') to a configuration for feeding a glass sheet (5) to be fed, wherein in said feeding configuration said tilting arms (11) lie below said resting surface (3) while in said loading configuration said tilting arms (11) are inclined with respect to said resting surface (3).

3. The loading and feeding table (1) according to one or more of the preceding claims, **characterized in that** in said resting surface (3) there is a plurality of compartments (21) which are configured to receive said tilting arms (11) in said feeding configuration.

4. The loading and feeding table (1) according to one or more of the preceding claims, **characterized in that** said advancement means (15) comprise a plurality of advancement belts (150) which are distributed on said resting surface (3), preferably interleaved with said compartments (21).

5. The loading and feeding table (1) according to one or more of the preceding claims, **characterized in that** two or more of said tilting arms (11) comprise, at the end thereof that is pivoted to said loading and feeding table (1), a supporting foot (110) which is adapted to support said sheet on hold (5') when said tilting arms (11) are inclined with respect to said resting surface (3).

6. The loading and feeding table (1) according to one or more of the preceding claims, **characterized in that** two or more of said tilting arms (11) each comprise grip means (112) which are configured to load a glass sheet (5') on said tilting arms (11).

7. The loading and feeding table (1) according to one or more of the preceding claims, **characterized in that** said supporting foot (110) is movable from a supporting configuration, in which it protrudes from said tilting arm (11) in order to support a glass sheet (5, 5'), to a retracted configuration, in which it does not engage said sheet (5, 5').

8. A cutting machine for laminated and/or monolithic glass (100), which comprises a table (1) for loading and feeding a glass sheet (5) and a table (23) for processing said glass sheet (5), said loading and feeding table (1) and said processing table (23) defining a resting surface (3) for a glass sheet being processed, said processing table (23) comprising a processing head (25) that can be actuated along a processing direction (27) in order to process said sheet (5) being processed, **characterized in that** said loading and feeding table (1) comprises a plurality of tilting arms (11) which are pivoted to said loading and feeding table (1) about a rotation axis (13) that is substantially at right angles to said processing direction (27) of said processing head (25), said tilting arms (11) being adapted to support a glass sheet on hold (5') while said sheet being processed (5) is being processed.

9. The cutting machine for laminated and/or monolithic glass (100) according to claim 8, **characterized in that** said processing table (23) is a cutting table, said processing head (25) is a cutting head and said processing direction (27) is a cutting direction.

10. The cutting machine for laminated and/or monolithic glass (100) according to claim 8 or 9, **characterized in that** it is constituted by said loading and feeding table (1) and by said cutting table (23).

11. A method for cutting a laminated and/or monolithic glass sheet, which comprises the step of moving a glass sheet being processed (5) from a resting surface (3) defined by a loading and feeding table (1) to a processing station (9), along a main direction of movement (7) of said glass sheet being processed (5), **characterized in that** it comprises the step of lifting a glass sheet (5'), on hold waiting to be processed, with respect to said resting surface (3) where said glass sheet being processed (5) is arranged, and about a rotation axis (13) that is substantially parallel to said main direction of movement (7) of said glass sheet being processed (5).
